Europäisches Patentamt

European Patent Office

Office européen des brevets

(19)

(11) Publication number : **0 425 711 B1**

(12)

# EUROPEAN PATENT SPECIFICATION

(45) Date of publication of patent specification :
24.11.93 Bulletin 93/47

(51) Int. Cl.⁵ : **C04B 28/04**, C04B 14/38,
// (C04B28/04, 14:06, 14:38)

(21) Application number : **90907498.1**

(22) Date of filing : **18.05.90**

(86) International application number :
**PCT/JP90/00635**

(87) International publication number :
**WO 90/14321 29.11.90 Gazette 90/27**

(54) **AN ELECTRICALLY CONDUCTIVE CEMENT COMPOSITION AND AN ELECTRICALLY CONDUCTIVE MASS PREPARED FROM THE COMPOSITION.**

(30) Priority : **22.05.89 JP 129934/89**

(43) Date of publication of application :
**08.05.91 Bulletin 91/19**

(45) Publication of the grant of the patent :
**24.11.93 Bulletin 93/47**

(84) Designated Contracting States :
**BE DE FR GB IT NL**

(56) References cited :
**Chemical Abstracts, vol. 108, No. 22, May 1988, (Columbus, Ohio, US), & JP A 6317244 (Nippon Sheet Glass Co., Ltd.; Nippon Glass Fiber Co., Ltd.) 25 January 1988
Chemical Abstracts, vol. 111, no. 4, 24 July 1989, (Columbus, Ohio, US), & JP A 0114137 (Dainippon Ink and Chemicals, Inc.) 18 January 1989
Chemical Abstracts, vol. 107, No. 24, December 1987, (Columbus, Ohio, US), see pages 291-292, abstract 222164y, & JP A 62212272 (Mitsubishi Mining and Cement Co. Ltd.) 18 September 1987
Chemical Abstracts, vol. 111, No. 6, 7 August 1989, (Columbus, Ohio, US), see page 323, abstract 44430e & JP A 0172947 (Denki Kagaku Kogyo K.K.) 17 March 1989**

(56) References cited :
**Chemical Abstracts, vol. 103, No. 26, December 1985, (Columbus, Ohio, US) see page 297, abstract 219950p & JP A 60151263 (Chugai Shoko K.K.) 9 August 1985
Chemical Abstracts, vol. 95, No. 22, November 1981, (Columbus, Ohio, US), see page 277, abstract 191464y and JP A 8173663 (Sekisui Chemical Co. Ltd.) 18 June 1981**

(73) Proprietor : **SEKISUI KAGAKU KOGYO KABUSHIKI KAISHA
4-4 Nishitemma 2-chome
Kita-ku Osaka 530 (JP)**

(72) Inventor : **FUKAGAI, Takayoshi 874-41, Utsuta Minakuchi-cho
Koga-gun
Shiga 528 (JP)**
Inventor : **ADACHI, Toshiyuki
222-28, Yokoe-cho Moriyama-shi
Shiga 524 (JP)**
Inventor : **KISHIDA, Sukemune 1-1-5, Honmachi Minakuchi-cho
Koga-gun
Shiga 528 (JP)**

(74) Representative : **Silverman, Warren et al
HASELTINE LAKE & CO. Hazlitt House 28 Southampton Buildings Chancery Lane
London WC2A 1AT (GB)**

## Description

An electrically conductive cement composition and an electrically conductive mass prepared from the composition

The present invention relates to an electrically conductive cement composition suitable for use as a grounding resistance reducer and as a grounding electrode material, and an electrically conductive mass prepared from the composition.

Two types of compositions have conventionally been employed as grounding resistance reducers used for power transmission pylons, electric poles, lightning rods, various electrical equipment, etc. One type of composition contains inorganic materials such as gypsum, and an electrolyte, while the other type contains cement, aggregate and carbon fibers.

However, the former type is susceptible to dissolution of the electrolyte when rainwater penetrates the material, hence, the electrically conductive properties of this type are not well sustained. Moreover, the mechanical strength of this type is poor. On the other hand, as regards the latter type, although the use of a large amount of carbon fiber which functions as an electrical conductor permits the preparation of resistance reducers with high electrical conductivity, the use of such a large amount of carbon fiber entails high economic costs.

An electrically conductive composition, which overcomes the above-discussed and numerous other disadvantages and deficiencies of the prior art, comprises portland cement, silica sand, and carbon fibers, wherein said silica sand is contained in an amount of 1 to 90 parts by weight for every 100 parts by weight of said portland cement, and said carbon fibers are contained in an amount of 0.6 to 1.7 parts by weight for every 100 parts by weight of the combined amount of said portland cement and silica sand.

In a preferred embodiment, the electrically conductive cement composition further comprises an admixture, wherein said admixture is contained in an amount of 0 to 200 parts by weight for every 100 parts by weight of said portland cement; said silica sand is contained in an amount of 1 to 90 parts by weight for every 100 parts by weight of the combined amount of said portland cement and admixture; and said carbon fibers are contained in an amount of 0.6 to 1.7 parts by weight for every 100 parts by weight of the combined amount of said portland cement, silica sand and admixture.

An electrically conductive mass of this invention is prepared by mixing the above-mentioned electrically conductive cement composition with water and curing the mixture; wherein said electrically conductive mass has a volume resistivity of less than $0.2 \, \Omega \cdot m$, flexural strength of $30 \, kg/cm^2$ or more, and compressive strength of $100 \, kg/cm^2$ or more.

Thus, the invention described herein makes possible the objectives of: (1) providing an electrically conductive cement composition which permits the preparation of an electrically conductive mass with excellent mechanical strength and high electrical conductivity, and (2) providing an inexpensive electrically conductive cement mass with the aforesaid superior characteristics.

The types of portland cement which can be used in the present invention are not particularly restricted, and examples of portland cement include ordinary portland cement, high-early-strength portland cement, ultra-high early strength portland cement, moderate heat portland cement, special portland cement and the like. Because ordinary portland cement is relatively inexpensive, it is generally used for the present purpose. Other types of cement than the above-mentioned portland cements can also be used in combination with the portland cement provided that the amount of the other cement is such that the physical properties of the resulting mass are not adversely affected.

As required, the cement composition of the present invention contains an admixture. The examples of the admixture include, calcium carbonate, fly ash, blast furnace slag, clay, air entraining agents, water reducing agents, etc. The applicable types of admixtures are not restricted to these materials. The admixture is contained in an amount of 200 parts by weight or less, and preferably 100 parts by weight or less for every 100 parts by weight of the portland cement.

The cement composition of the present invention comprises silica sand as aggregate. The functions of the silica sand are regarded as consistent with the uniform dispersion of the carbon fiber and the enhancement of the mechanical strength of the mass prepared from the cement composition.

Dried silica sand should preferably be used for the present purpose. As regards the grain size of the silica sand, commercially available silica sand No. 4, consisting mostly of silica grains sieved at mesh 14 but caught at mesh 28 is generally employed, however, No. 2, No. 3, No. 5 and No. 6, etc., can also be used. The silica sand is contained in an amount of 1-90 parts by weight, preferably 3-50 parts by weight and more preferably 5-15 parts by weight for every 100 parts by weight of the combined amount of the portland cement and admixture. If the amount of the silica sand is less than 1 part by weight, then the process of adding water to the constituents of the composition, kneading and preparing the mass would be unduly arduous, and furthermore, the strength of the mass obtained after the hydration reaction would be low. On the other hand, if the amount of silica sand is more than 90 parts by weight, then the electrical conductivity of the mass so obtained would be low; this is attributed to poor dispersion of the carbon fibers in the constituents of the composition, or to a large ratio of breakage of the carbon fibers. Moreover, contrary to expectation, experiments have demonstrated that a mass with superior mechanical strength characteristics is not obtained if the amount of the silica sand in the mixture is unduly large.

The types of carbon fibers appropriate for use in the present invention are those with low electrical resistance and of relatively low cost. For example, graphite fibers obtained from pitch (so-called 2000°C sintered fibers) are suitable for the present purpose. In general, the carbon fibers used should be of length 5-30 mm, preferably 10-25 mm. If the carbon fibers were unduly short, then the addition of a larger volume of carbon fibers would be necessary, and consequently the workability of forming the electrically conductive mass would be poor. Moreover, the mechanical strength of the mass would be low. Conversely, if the carbon fibers were excessively long, then the dispersion of the fibers in the mixture would be poor, and consequently the electrical conductivity of the mass would not be uniform. In order to impart good electrical conductivity to the mass, the diameter of the carbon fibers should be 40 μm or less, preferably about 10-30 μmm, and more preferably 10-20 μm. The carbon fibers are contained in an amount of 0.6-1.7 parts by weight, preferably 0.7-1.5 parts by weight, and still more preferably 0.8-1.3 parts by weight, for every 100 parts by weight of the combined amount of the cement, silica sand and admixture. If the amount of the carbon fibers is more than 1.7 parts by weight, then the electrical conductivity does not increase appreciably, whereas the cost of the material rises accordingly. Moreover, an excessive amount of carbon fibers results in a mass of low mechanical strength.

One or more kinds of the above-mentioned portland cements, silica sands, carbon fibers, or admixtures can be contained in the composition of the present invention.

In order to obtain an electrically conductive mass using the electrically conductive cement composition of the present invention, for example, the following process can be employed. First, the aforesaid portland cement, silica sand, carbon fibers and, if necessary, admixture, are mixed by a conventional method. The order of addition of these ingredients is not subject to any particular restriction. Water and, if necessary, a small amount of gravel, is then added, whereupon the mixture of the aforesaid ingredients is hardened by hydration, thus yielding the desired mass. The amount of water added is ordinarily 40-80 parts of weight, and preferably 45-70 parts by weight for every 100 parts by weight of the dry cement composition. In cases where a water-absorbing material or a material that will form a hydrate is added as an admixture, the amount of water should be appropriately increased. The order in which the cement composition, water, and, if necessary, gravel are added is subject to no particular restriction. The desired electrically conductive mass is then obtained by allowing the mixture to harden. For example, the mixture so obtained is poured into a mold, pressed, rotationally molded, or extruded, etc., resulting in a wet mass. Then the wet mass is cured at ordinary temperature or by heating.

The electrically conductive mass of the present invention, prepared in the above-mentioned manner, possesses a volume resistivity of less than 0.2 $\Omega \cdot m$, flexural strength of 30 kg/cm$^2$ or more and compressive strength of 100 kg/cm$^2$ or more, thus, the electrical conductivity of the mass so obtained is high, and the mechanical strength of the mass is great.

The electrically conductive cement composition of the present invention can be employed as grounding resistance reducers for electric poles, lightning conductors, or the like. For example, after adding water to the aforesaid cement composition and mixing, the resulting mixture can be poured so as to cover the upper portion of a copper-clad rod, which has been driven into the earth as a grounding electrode, and then allowed to harden. In cases where copper foil grounding sheets are used as grounding electrodes for high-tension power transmission pylons, the peripheries of the lead wires between the sheets may be covered with the above-mentioned mixture of cement constituents and water, and then allowed to harden.

The electrically conductive cement composition of the present invention can also be used in the grounding electrodes of electric poles or lightning rods. For example, the cement constituents with added water may be poured so as to directly surround the peripheries of the grounding lead wires and allowed to harden, and the resulting mass will serve as a grounding electrode.

In each of the above-mentioned applications, the said cement composition is hardened to form an electrically conductive mass of the present invention. Because the electrically conductive mass which constitutes the grounding electrode is a hard solid, the above-mentioned electrode is not readily deformed by external pressure, and thus the electrical resistance of the grounding electrodes is not increased. Furthermore, splitting of grounding electrodes due to the surge current created by lightning bolts and consequent increase in electrical resistance can be prevented.

The electrically conductive cement composition of the present invention comprises portland cement, silica sand, carbon fibers and, if necessary, an admixture, while the proportions of silica sand and carbon fibers are prescribed as above. Despite a comparatively small proportion of silica sand and carbon fibers, the electrically conductive mass that is obtained by using the cement composition possesses excellent electrical conductivity and mechanical strength. Moreover, since the amount of the carbon fiber is relatively small, an electrically conductive mass with the excellent characteristics mentioned above can be obtained at economical cost.

The electrically conductive mass of the present invention possesses low volume resistivity, large flexural strength, and large compressive strength. Furthermore, unlike conventional gypsum types of resistance reducers, the electrically conductive component of the present cement composition is not dissolved in water, and thus the electrically conductive mass maintains, adequate mechanical strongth. Therefore, the electrically conductive cement composition of the present invention is highly suitable for use as grounding electrode materials and grounding resistance reducers for objects susceptible to the induction of surge currents by lightning bolts, etc., such as power transmission pylons, electric poles and lightning rods, etc.

EXAMPLES

Example 1

One hundred parts by weight of ordinary portland cement, approximately 1.5 parts by weight of carbon fibers (i,e., graphite fibers obtained from pitch, with a mean diameter of 14.5 μm and a length of 10-25 mm), 60 parts by weight of calcium carbonate and 5 parts by weight of dry No. 4 silica sand were mixed for approximately five minutes in a universal stirring mixer, thereby dispersing the carbon fibers and obtaining electrically conductive cement composition of the present invention. A portion of this mixture was sampled for visual examination of the state of dispersion of the carbon fibers. The results are shown in Table 1, along with those obtained for Examples 2-10 and Comparative Examples 1-5 described below. The state of dispersion of the carbon fibers was graded according to the following three-grade scale.

 o: excellent dispersion

 Δ: comparatively good dispersion

 X: tangled clumps (pills) of fibers present

Then, 70 parts by weight of water was added to this mixture, the ingredients were thoroughly mixed, and the wet mass was allowed to harden by hydration, therefore obtaining an electrically conductive mass of the present invention.

The volume resistivity, flexural strength and compressive strength of the resulting mass were measured in accordance with the procedures specified by JIS R5201, "Physical Testing Methods of Cement." For volume resistivity testing, a mass formed in the shape of a 4 x 4 x 8 cm rectangular parallelopiped and cured for 5 days was used as a specimen, and the measurement was performed using an AC bridge type resistor. For testing flexural and compressive strength, masses formed in the shape of a 4 x 4 x 16 cm rectangular parallelopiped and cured for 8 days were used as specimens.

The results of these tests are shown in Table 1, along with the corresponding results for Examples 2-10 and Comparative Examples 1-5.

Examples 2-10

Electrically conductive masses were prepared by the same process as in Example 1, except that the proportions of the respective ingredients and the length of the carbon fibers used were as shown in Table 1.

Comparative Examples 1-5

Electrically conductive masses were prepared by the same process as in Example 1, except that the proportions of the respective ingredients and the length of the carbon fibers used were as shown in Table 1.

4

Table 1

|  | Examples | | | | | | | | | | Comparative Examples | | | | |
|---|---|---|---|---|---|---|---|---|---|---|---|---|---|---|---|
|  | 1 | 2 | 3 | 4 | 5 | 6 | 7 | 8 | 9 | 10 | 1 | 2 | 3 | 4 | 5 |
| Portland cement | 100 | 100 | 100 | 160 | 100 | 100 | 100 | 100 | 100 | 100 | 100 | 100 | 100 | 100 | 100 |
| Calcium Carbonate | 60 | 60 | — | — | 55 | 55 | 55 | — | — | — | — | — | — | — | — |
| Silica sand No.3 | — | — | — | — | — | — | 25 | — | — | — | — | — | — | — | — |
| No.4 | 5 | 10 | 10 | 20 | 25 | — | — | 25 | 50 | 80 | 100 | 200 | 300 | — | — |
| No.5 | — | — | — | — | — | 25 | — | — | — | — | — | — | — | 300 | 400 |
| Item A | (3.0) | (6.25) | (10.0) | (12.5) | (16.1) | (16.1) | (16.1) | (25) | (50) | (80) | (100) | (200) | (300) | (300) | (400) |
| Carbon fibers Fiber length 10mm | 0.74 | 0.76 | — | — | 0.81 | 0.81 | 0.81 | 1.05 | — | 0.72 | 0.9 | 1.35 | 1.8 | 1.8 | 2.25 |
| Fiber length 18mm | — | — | 1.62 | — | — | — | — | — | — | — | — | — | — | — | — |
| Fiber length 25mm | 0.74 | 0.76 | — | 1.62 | 0.81 | 0.81 | 0.81 | — | 1.26 | 0.72 | 0.9 | 1.35 | 1.8 | 1.8 | 2.25 |
| Item B | (0.88) | (0.89) | (1.47) | (0.9) | (0.9) | (0.9) | (0.9) | (0.84) | (0.84) | (0.80) | (0.9) | (0.9) | (0.9) | (0.9) | (0.9) |
| Water | 70 | 70 | 45 | 70 | 70 | 70 | 70 | 50 | 60 | 60 | 45 | 45 | 45 | 45 | 45 |
| State of dispersion | O | O | △ | △ | O | O | O |  |  |  | △ | × | × | × | × |
| Volume resistivity (Ω · m) | 0.11 | 0.091 | 0.055 | 0.095 | 0.105 | 0.105 | 0.085 | 0.118 | 0.130 | 0.152 | 0.20 | 0.34 | 0.53 | 0.31 | 0.39 |
| Flexural strength (kg/cm²) | 30.2 | 57.9 | 63.2 | 48.4 | 42.7 | 38.6 | 42.1 |  |  |  | 57.9 | 43.3 | 30.1 | 22.5 | 9.9 |
| Compressive strength (kg/cm²) | 147 | 237 | 181 | 194 | 144 | 134 | 139 |  |  |  | 237 | 202 | 109 | 80 | 27 |

a) Item A represents the rates of silica sand to the total weight (100) of cement and calcium carbonate.

b) Item B represents the rates of carbon fibers to the total weight (100) of cement, calcium carbonate and silica sand.

EP 0 425 711 B1

Examples 11-14

Electrically conductive masses were prepared by the same process as in Example 1, except that the proportions of the respective ingredients and length of the carbon fibers used were as shown in Table 2.

The volume resistivities of the electrically conductive masses so obtained are shown in Table 2, together with the corresponding results for the Comparative Examples 6-8 described below.

Comparative Examples 6-8

Electrically conductive masses were prepared by the same process as in Example 1, except that the proportions of the respective ingredients and length of the carbon fibers used were as shown in Table 2.

Table 2

| | Examples | | | | Comparative Examples | | |
|---|---|---|---|---|---|---|---|
| | 11 | 12 | 13 | 14 | 6 | 7 | 8 |
| Portland cement | 100 | 100 | 100 | 100 | 100 | 100 | 100 |
| Calcium Carbonate | 60 | 60 | 60 | 55 | 60 | 60 | 55 |
| Silica sand No.4 | 20 | 20 | 20 | 25 | 20 | 20 | 25 |
|   Proportion (wt%) a) | (12.5) | (12.5) | (12.5) | (12.5) | (12.5) | (12.5) | (16.1) |
| Carbon fibers | | | | | | | |
|   Fiber length 6mm | — | — | — | — | — | — | 1.0 |
|   Fiber length 18mm | 3.0 | 2.0 | 1.5 | | 0.5 | 1.0 | — |
|   Fiber length 25mm | — | — | — | 2.0 | — | | — |
|   Proportion (wt%) b) | (1.67) | (1.11) | (0.83) | (1.11) | (0.28) | (0.55) | (0.55) |
| Water | 70 | 72 | 70 | 71 | 70 | 70 | 70 |
| Volume resistivity ($\Omega \cdot m$) | 0.062 | 0.112 | 0.142 | 0.076 | 1.44 | 0.24 | 0.36 |

a) Item A represents the rates of silica sand to the total weight (100) of cement and calcium carbonate.

b) Item B represents the rates of carbon fibers to the total weight (100) of cement, calcium carbonate and silica sand.

## Claims

1. An electrically conductive cement composition comprising portland cement, silica sand, and carbon fibers; wherein said silica sand is contained in an amount of 1 to 90 parts by weight for every 100 parts by weight

7

of said portland cement: and

said carbon fibers are contained in an amount of 0.6 to 1.7 parts by weight for every 100 parts by weight of the combined amount of said portland cement and silica sand.

2. An electrically conductive cement composition according to claim 1, further comprising an admixture; wherein

said admixture is contained in an amount of 0 to 200 parts by weight for every 100 parts by weight of said portland cement;

said silica sand is contained in an amount of 1 to 90 parts by weight for every 100 parts by weight of the combined amount of said portland cement and admixture; and

said carbon fibers are contained in an amount of 0.6 to 1.7 parts by weight for every 100 parts by weight of the combined amount of said portland cement, silica sand and admixture.

3. An electrically conductive mass prepared by mixing an electrically conductive cement composition of claim 1 with water and curing the mixture; wherein

said electrically conductive mass has a volume resistivity of less than 0.2 $\Omega \cdot m$, flexural strength of 30 kg/cm$^2$ or more, and compressive strength of 100 kg/cm$^2$ or more.

**Patentansprüche**

1. Elektrisch leitende, Portlandzement, Quarzsand (Silikasand) und Kohlenstoff-Fasern umfassende Zementzusammensetzung, die auf jeweils 100 Gewichtsteile des Portlandzements Quarzsand (Silikasand) in einer Menge von 1 bis 90 Gewichtsteilen und auf jeweils 100 Gewichtsteile der kombinierten Menge an Portlandzement und Quarzsand (Silikasand) Kohlenstoff-Fasern in einer Menge von 0,6 bis 1,7 Gewichtsteilen enthält.

2. Elektrisch leitende Zementzusammensetzung nach Anspruch 1, die außerdem einen Zuschlag umfaßt und auf jeweils 100 Gewichtsteile des Portlandzements Zuschlag in einer Menge von 0 bis 200 Gewichtsteilen enthält; auf jeweils 100 Gewichtsteile der kombinierten Menge an Portlandzement und Zuschlag Quarzsand (Silikasand) in einer Menge von 1 bis 90 Gewichtsteilen enthält und auf jeweils 100 Gewichtsteile der kombinierten Menge an Portlandzement, Quarzsand (Silikasand) und Zuschlag Kohlenstoff-Fasern in einer Menge von 0,6 bis 1,7 Gewichtsteilen enthält.

3. Elektrisch leitende Masse, die durch Mischen einer elektrisch leitenden Zementzusammensetzung nach Anspruch 1 mit Wasser und Härten der Mischung hergestellt ist, wobei die elektrisch leitende Masse einen spezifischen Durchgangswiderstand von weniger als 0,2 $\Omega \cdot m$, eine Biegefestigkeit von 30 kg/cm$^2$ oder mehr und eine Druckfestigkeit von 100 kg/cm$^2$ oder mehr aufweist.

**Revendications**

1. Composition à base de ciment, conductrice de l'électricité, constituée de ciment Portland, de sable siliceux et de fibres de carbone ; dans laquelle ledit sable siliceux est contenu dans une proportion de 1 à 90 parties en poids pour 100 parties en poids dudit ciment Portland ; et

lesdites fibres de carbone sont contenues dans une proportion de 0,6 à 1,7 parties en poids pour 100 parties en poids de la quantité mélangée dudit ciment Portland et du sable siliceux.

2. Composition à base de ciment, conductrice de l'électricité selon la revendication 1 comprenant, de plus, un adjuvant ; dans laquelle

ledit adjuvant est contenu dans une proportion de 0 à 200 parties en poids pour 100 parties en poids dudit ciment Portland ;

ledit sable siliceux est contenu dans une proportion de 1 à 90 parties en poids pour 100 parties en poids de la quantité mélangée dudit ciment Portland et de l'adjuvant ; et

lesdites fibres de carbone sont contenues dans une proportion de 0,6 à 1,7 parties en poids pour 100 parties en poids de la quantité mélangée dudit ciment Portland, du sable siliceux et de l'adjuvant.

3. Masse conductrice de l'électricité préparée par mélange d'une composition à base de ciment, conductrice de l'électricité, selon la revendication 1, avec de l'eau et prise du mélange ; dans laquelle

ladite masse conductrice de l'électricité a une résistivité volumique inférieure à 0,2 $\Omega$.m, une résistance à la flexion de 30 kg/cm$^2$ ou plus et une résistance à la compression de 100 kg/cm$^2$ ou plus.